Europäisches Patentamt

European Patent Office

Office européen des brevets

(11) Publication number: **0 454 132 A1**

# EUROPEAN PATENT APPLICATION

(21) Application number: 91106719.7

(22) Date of filing: 25.04.91

(51) Int. Cl.5: **G05B 11/36, G05B 13/02**

(30) Priority: 27.04.90 JP 114023/90

(43) Date of publication of application:
**30.10.91 Bulletin 91/44**

(84) Designated Contracting States:
**AT BE CH DE DK ES FR GB GR IT LI NL SE**

(71) Applicant: OMRON CORPORATION
**10, Tsuchido-cho Hanazono Ukyo-ku
Kyoto 616(JP)**

(72) Inventor: Ueda, Tamio, c/o OMRON
**CORPORATION
Intell. Property Center, 20, Igadera,
Shimokaiinji
Nagaokakyo-shi, Kyoto 617(JP)**
Inventor: Matsunaga, Nobutomo, c/o OMRON
**CORPORATION
Intell. Property Center, 20, Igadera,
Shimokaiinji
Nagaokakyo-shi, Kyoto 617(JP)**
Inventor: Saito, Yumi, c/o OMRON
**CORPORATION
Intell. Property Center, 20, Igadera,
Shimokaiinji
Nagaokakyo-shi, Kyoto 617(JP)**

(74) Representative: WILHELMS, KILIAN &
**PARTNER Patentanwälte
Eduard-Schmid-Strasse 2
W-8000 München 90(DE)**

(54) Periodic disturbance compensating process control device.

(57) The invention relates to a device for periodic disturbance compensating process control comprising a main operating amount determining means (10) for determining an amount of operation corresponding to control deviation between a control target value and a control amount, a periodic disturbance detecting means (12) for detecting a periodic disturbance, and an auxiliary operating amount determining means (14) for generating an amount of operation corresponding to a periodic disturbance detected by said periodic disturbance detecting means.

EP 0 454 132 A1

FIELD OF THE INVENTION

The present invention relates to a process control device, and more particularly to a periodic disturbance compensating process control device, applicable to industrial control systems subject to periodic disturbance.

BRIEF DESCRIPTION OF THE PRIOR ART

As process control devices for a variety of industrial machines there are known linear automatic control systems adapted to determine the amount of operation corresponding to a control deviation between a control target value and an amount of control, such as PID control, and such systems have been used in constant value control by which the temperature or the like is maintained at a predetermined control target value.

Thus, in the field of plastics molding or packaging machinery, PID control is generally used for the temperature control of the metal mold or the heat-sealing electric iron, but it is known that a temperature drop occurs every time a heat-robbing event, such as an injection shot or sealing of the packaging vinyl film, takes place. Against this temperature drop, the PID controller increases the operating amount to return the temperature to the control target value in the event of an increased control deviation, but since this operation is carried out with the ordinary gain characteristic and according to a fixed algorithm, it takes time for the temperature to return to the control target value. This is a factor preventing shortening of the cycle time of industrial machinery.

OBJECT AND SUMMARY OF THE INVENTION

The present invention was accomplished with a view to solving the above-mentioned problems associated with the conventional process controller. Thus, the object of the present invention is to provide a periodic disturbance compensating process control device which performs a necessary compensation for periodic disturbance to improve the performance of control of periodic disturbance.

The present invention is therefore directed to a periodic disturbance compensating process control device, comprising: a main operating amount determining means for determining an amount of operation corresponding to the control deviation between a control target value and a control amount; a periodic disturbance detecting means for detecting a periodic disturbance; and an auxiliary operating amount determining means for generating an amount of operation corresponding to a periodic disturbance detected by said periodic disturbance detecting means.

BRIEF DESCRIPTION OF THE DRAWINGS

Fig. 1 is a schematic view illustrating one embodiment of the periodic disturbance compensating process control device according to the present invention;

Fig. 2 is a waveform diagram showing the waveform of control deviation under the condition where a periodic disturbance is present;

Fig. 3 is a rule table showing an example of of the fuzzy rule for presumption of the probability of periodic disturbance;

Fig. 4 is a graph showing a membership function;

Fig. 5 is a rule table showing an example of the fuzzy rule for presumption of disturbance cycle;

Fig. 6 is a rule table showing an example of the fuzzy rule for presumption of disturbance magnitude; and

Fig. 7 is a rule table showing an example of the fuzzy rule for determination of the amount of fuzzy operation.

DETAILED DESCRIPTION OF THE PREFERRED EMBODIMENT

The preferred embodiment of the invention is described in detail with reference to the accompanying drawings.

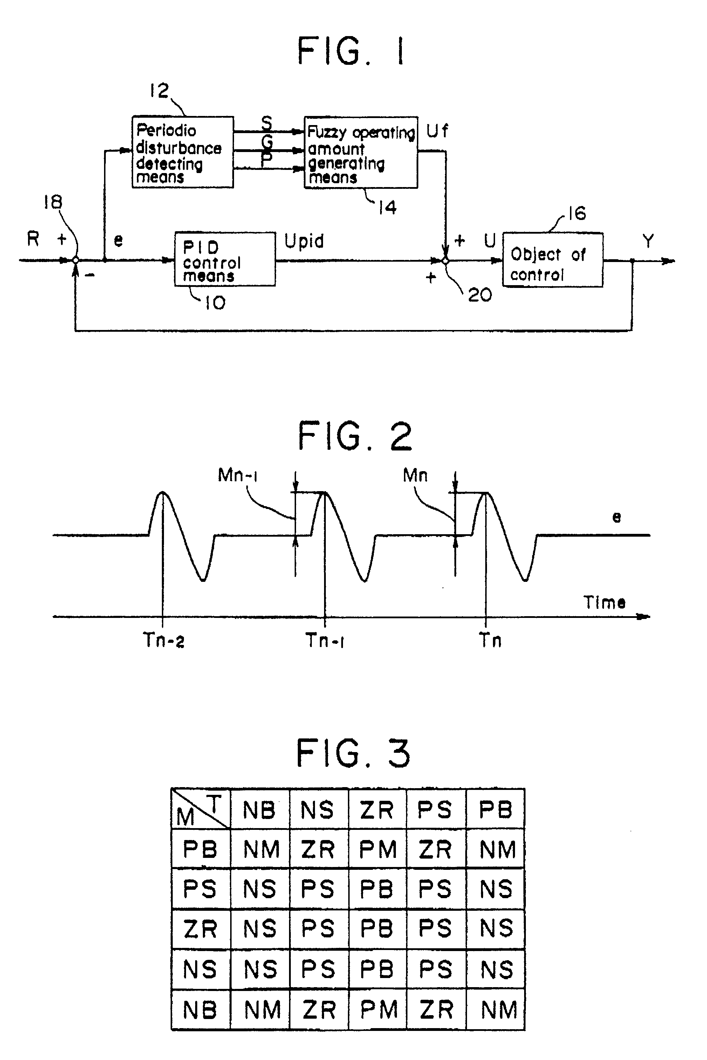

Fig. 1 shows the basic construction of a periodic disturbance compensating process control device according to the invention. The periodic disturbance compensating process control device according to the invention comprises a PID controller 10 which is a main operating amount determining means, a periodic disturbance detecting means 12, and a fuzzy operating amount generating means 14 which is an auxiliary operating amount determining means.

The DID control means 10, which may be of known construction, receives a control deviation value e between a control amount Y from an object of control (a plant) 16 and a control target value R from a summation point 18, computes the proportional operating amount, integral operating amount, and differential operating amount therefrom, and outputs the total operating amount Upid to a summation point 20.

The periodic disturbance detecting means 12 detects the disturbance cycle time and the magnitude of the disturbance from the time course of control deviation e, calculates the difference T between the current disturbance cycle time $(T_n-T_{n-1})$ and the previous disturbance cycle time $(T_{n-1}-T_{n-2})$ and the difference M between the magnitude of the current disturbance $M_n$ and the magnitude of the previous disturbance $M_{n-1}$. Said detecting means then determines the probability of periodic disturbance, the cycle time S and magnitude G of the disturbance according to the respective fuzzy rules, and outputs the resulting information to the fuzzy operating amount generating means 14.

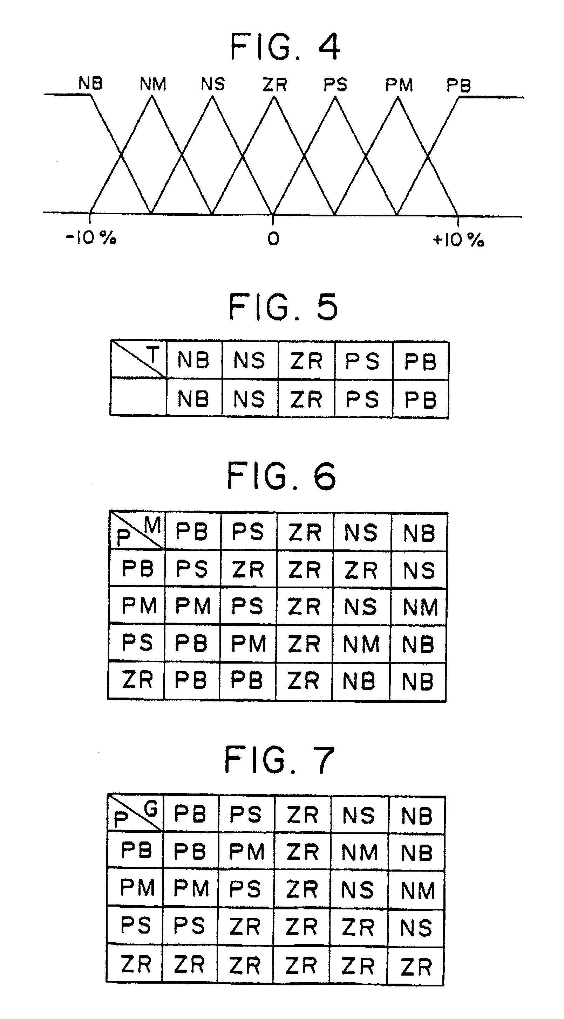

The fuzzy presumption of the probability P of periodic disturbance is performed as follows. Thus, with the periodic disturbance cycle time difference T and magnitude difference M as inputs, the presumption is carried out according to the fuzzy rule shown in Fig. 3 and the membership function shown in Fig. 4. According to the fuzzy rule shown in Fig. 3, the probability P of periodic disturbance is presumed to be large when the changes in disturbance cycle time difference T and magnitude difference M are small. However, since the magnitude of disturbance is decreased as a fuzzy operating amount (an operating amount compensating for disturbance) is applied, the disturbance cycle time difference T is given a greater weight in the fuzzy rule shown in Fig. 3.

In the fuzzy rules shown in Fig. 3 and Figs. 5 through 7 which are described in detail hereinafter, the language information used comprises NB, NM, NS, ZR, PS, PM and PB which are fuzzy labels indicating: NB = negative and big, NM = negative and medium, NS = negative and small, ZR = near zero, PS = positive and small, PM = positive and moderate, and PB = positive and big.

The output of the above presumption of the probability P of periodic disturbance, according to the fuzzy rule, represents the fraction of change in the probability P of periodic disturbance for a predetermined unit of time. The information concerning the probability P of the current periodic disturbance to be fed to the fuzzy operating amount generating means 14 is the sum of the probability (percent) of the previous periodic disturbance and the fraction of change in the probability of the current periodic disturbance, which is a digital data within the range of 0 to 100 percent.

The fuzzy presumption of disturbance cycle time S is carried out, with the disturbance cycle time difference T as an input, according to the fuzzy rule shown in Fig. 5 and a membership function equivalent to the membership function shown in Fig. 4 and outputs the presumed fraction of change in the disturbance cycle time for a predetermined time period. By this presumption, the current disturbance cycle time S outputted to the fuzzy operating means 14 is the sum of the change in the previous disturbance cycle S and the change in the current disturbance cycle. However, the initial value of the previous disturbance cycle is set to $T_1$-$T_0$.

Presumption of the magnitude G of periodic disturbance is carried out, with the disturbance magnitude difference M and the probability P of periodic disturbance as inputs, according to the fuzzy rule shown in Fig. 6 and a membership function equivalent to the membership function of Fig. 4. The change in the magnitude of disturbance for a predetermined unit time is outputted as the result of presumption. Since the magnitude of disturbance is decreased as a fuzzy operating amount is given, a correction for this decrease has been made in the fuzzy rule of Fig. 6.

The magnitude G of current disturbance, which is fed to the fuzzy operating amount generating means 14 as the result of this presumption, is the sum of the magnitude of the previous disturbance and the fraction of change in the magnitude of the current disturbance. However, the initial value of the previous summation may be $M_0$.

The fuzzy operating amount generating means 14 receives information concerning the current disturbance cycle time S, current disturbance magnitude G and current disturbance probability P, determines the timing of calculation of the fuzzy operating amount according to the current disturbance cycle S information and, with the current periodic disturbance magnitude G and current periodic disturbance probability P as inputs, determines the current fuzzy operating amount (the amount of periodic disturbance compensation) Uf according to the fuzzy rule shown in Fig. 7 and a membership function equivalent to the membership function of Fig. 3. In the fuzzy rule of Fig. 7, the amount of fuzzy operation Uf is set according to the disturbance magnitude G. However, where the periodic disturbance probability p is small, the operating amount Uf is decreased.

The fuzzy operating amount Uf generated by the fuzzy operating amount generating means 14 is added to the operating amount Upid from the PID control means 10 at the summation point 20, and the global operating amount U is fed to an object of control 16.

In accordance with the above system, at the initiation of control, the PID control means applies the operating amount equivalent to the normal PID control amount to the object of control 16. Since the probability of periodic disturbance is small under this condition even if a disturbance occurs, the fuzzy operating amount Uf is nearly zero.

As the periodic disturbance begins to appear, the periodic disturbance detecting means 12 performs the fuzzy presumptions of the cycle time S, magnitude G and probability P of the disturbance. According to the results of the presumptions, the fuzzy operating amount generating means 14 produces the fuzzy operating amount Uf which is added to the operating amount Upid from the PID control means 10, and the sum is fed to the object of control 16. As the cumulative number of periodic disturbances increases and the probability P of periodic disturbance becomes large, the fuzzy operating amount Uf is increased.

As the fuzzy operating amount just sufficient to cancel the periodic disturbance is given, a steady state is established and if the cycle time S and magnitude G of disturbance change thereafter, the compensation for periodic disturbance is performed with the automatically adjusted fuzzy operating amount Uf.

While, in the above embodiment, the fuzzy operating amount, viz. the amount of compensation for periodic disturbance, is determined by fuzzy presumptions, this operation can be done by computation according to mathematical expressions without resort to fuzzy presumption and, even then, a similar result is obtained.

It will be apparent from the above description that since the periodic disturbance compensating process controller, according to the present invention produces an operating amount corresponding to a periodic disturbance, the performance of control of periodic disturbance is remarkably improved over the system depending on PID control alone, and the distortion of the control amount waveform is minimized. Moreover, even if the cycle time and magnitude of periodic disturbance are not recognized by the operator, the learning ability of the control device automatically insures the optimum control and dispenses with tedious analytical operation. If the cycle time and magnitude of disturbance are known, the relevant data may be set in the controller so that the optimum control is realized from the beginning of control.

The above description and the accompanying drawings are merely illustrative of a mode of application of the principles of the present invention and are not limiting. Numerous other arrangements which embody the principles of the invention and which fall within its spirit and scope may be readily devised by those skilled in the art. Accordingly, the invention is not limited by the foregoing description, but is only limited by the scope of the appended claim.

## Claims

1. A device for periodic disturbance compensating process control, comprising a main operating amount determining means for determining an amount of operation corresponding to control deviation between a control target value and a control amount; a periodic disturbance; detecting means for detecting a periodic disturbance, and an auxiliary operating amount determining means for generating an amount of operation corresponding to a periodic disturbance detected by said periodic disturbance detecting means.

# FIG. 1

# FIG. 2

# FIG. 3

| M\T | NB | NS | ZR | PS | PB |
|-----|-----|-----|-----|-----|-----|
| PB | NM | ZR | PM | ZR | NM |
| PS | NS | PS | PB | PS | NS |
| ZR | NS | PS | PB | PS | NS |
| NS | NS | PS | PB | PS | NS |
| NB | NM | ZR | PM | ZR | NM |

EP 0 454 132 A1

## FIG. 4

## FIG. 5

| T | NB | NS | ZR | PS | PB |
|---|----|----|----|----|----|
|   | NB | NS | ZR | PS | PB |

## FIG. 6

| P \ M | PB | PS | ZR | NS | NB |
|-------|----|----|----|----|----|
| PB | PS | ZR | ZR | ZR | NS |
| PM | PM | PS | ZR | NS | NM |
| PS | PB | PM | ZR | NM | NB |
| ZR | PB | PB | ZR | NB | NB |

## FIG. 7

| P \ G | PB | PS | ZR | NS | NB |
|-------|----|----|----|----|----|
| PB | PB | PM | ZR | NM | NB |
| PM | PM | PS | ZR | NS | NM |
| PS | PS | ZR | ZR | ZR | NS |
| ZR | ZR | ZR | ZR | ZR | ZR |

| | DOCUMENTS CONSIDERED TO BE RELEVANT | | EP 91106719.7 |
|---|---|---|---|

| Category | Citation of document with indication, where appropriate, of relevant passages | Relevant to claim | CLASSIFICATION OF THE APPLICATION (Int. Cl.5) |
|---|---|---|---|
| Y | DD - A - 82 586 (ULRICH) * Totality * | 1 | G 05 B 11/36 G 05 B 13/02 |
| Y | DE - A1 - 3 311 048 (TOKYO SHIBAURA) * Fig. 5,7,9; abstract * | 1 | |
| A | EP - A2 - 0 152 871 (K.K. TOSHIBA) * Abstract; fig. 2,4,5,10 * | 1 | |
| A | EP - A2 - 0 333 477 (K.K. TOSHIBA) * Abstract; fig. 1,4-6 * | 1 | |
| A | EP - A1 - 0 241 286 (MITSUBISHI DENKI K.K.) * Page 11, line 17 - page 12, line 4 * ---- | 1 | |

TECHNICAL FIELDS SEARCHED (Int. Cl.5)

G 05 B  5/00
G 05 B 11/00
G 05 B 13/00
G 05 B 15/00

The present search report has been drawn up for all claims

| Place of search | Date of completion of the search | Examiner |
|---|---|---|
| VIENNA | 25-06-1991 | FIETZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

EPO FORM 1503 03.82 (P0401)